# EUROPEAN PATENT APPLICATION

(11) **EP 2 210 475 A2**
(43) Date of publication of application: **28.07.2010**
(21) Application number: 10160933.7
(22) Date of filing: 26.05.2008
(51) Int. Cl.: A01G 1/00, A01G 9/10

(54) **Seedling tray for making a vegetated surface**

(30) Priority: 25.05.2007 IT PI20070062
(62) Divisional of application: 08762722.0
(71) Applicant: Tecology S.R.L., 20122 Milano (IT)
(72) Inventor: The designation of the inventor has not yet been filed
(74) Representative: Zardi, Marco

(57) **Abstract**

The invention relates to a seedling tray (20a) for making a vegetated surface parallel to a structure/wall, the seedling tray comprising a bottom, side faces (21, 22) and internal walls (23) defining a plurality of cells (24a), for receiving growth substrates and rooted seedling. Each cell comprises an opening, wherefrom the rooted plants may protrude, and holes (32) through inner faces (43) of the cells (24a), for the passage of roots.

## Description

### Field of the invention

The present invention relates to a method for creating vegetated surfaces, in particular, turfs, or surfaces that comprise ground cover plants or flowering plants. The vegetated surfaces can be oriented according to any spatial arrangement, for example they may be highly steep or vertical surfaces, or downwards oriented planar surfaces, as well as curved surfaces, or indoor or outdoor surfaces.

In particular, the invention relates to "vertical turfs", which are useful, for example, to cover building walls.

Furthermore, the invention relates to a modular support that is suitable for producing said vegetated surfaces.

### Background of the invention

It is often desired to cover a wide range of large surfaces with vegetation. In particular, the need is felt of temporary or permanently providing vertical or highly steep, or even downwards oriented planar vegetated surfaces, as well as curved vegetated surfaces, pertaining to buildings and in particular public buildings. This may be desirable for aesthetic purposes, for providing an architectural feature to improve the look of a building, but may also have environmental implications, to provide a means for limiting high summer outdoor temperatures in towns and for absorbing traffic air pollutants.

A relatively small number of climbing species are helpful to this purpose; furthermore, the plants belonging to such species must be rooted in the ground, therefore a long growing time is normally required before they completely cover the surfaces, as desired.

Besides, various methods are known for cultivating plants on substantially vertical surfaces. Some methods provide arranging support frames for flowerpots or other containers that are distributed along a vertical wall, as described in EP1690448. By using species that tend to grow towards below, it is fairly easy to obtain vegetated vertical surfaces.

Other methods provide vertically arranging rooting substrate blocks that are held in their position by suitable support means, as it is described in JP8302712, FR2747265, W02007014993, FR2903274.

FR2747265 describes a device that comprises a rooting cloth that is mounted on a support wall; it provides furthermore, a protective wall for the roots, through which cuts are made for introducing the plants, which are therefore allowed to grow through the cuts. In particular, the protective wall may be a modular one, i.e. a wall that is made of single elements to be mounted, to assist making and maintaining vegetated surface. However, once one of such elements has been removed, it is necessary to pull the roots away from the cloth, and a risk may arise of fall of solid material that is located between the protective wall and the cloth. Moreover, the roots of a plant element from the surface may affect adjacent modular elements, and the advantages of modularity may be partially lost; in other words, when maintenance or dismantling of a limited region of the vegetated wall is required, other elements, which are not involved with such operations, may also have to be dismantled. Furthermore, the cloth and the vegetated surface are very close to the support wall, and therefore a waterproof layer may be required to protect the wall; this is true, in particular, if the cloth is also used for irrigation purpose, as provided in an exemplary implementation of the method.

Some aesthetic drawbacks are also present in the above-mentioned vegetated surfaces: first of all, the protection wall elements and the support structures cannot easily be hidden, in particular, as long as the growing plants are just seedlings; besides, at the beginning the plants grow mainly horizontally, then the growth direction turns upwardly or downwardly, which may give the vegetated surface a confused and disordered look. In any case, it is quite difficult to obtain a vegetated surface similar to a vertical turf by means of the above-mentioned systems.

In FR2903274 a vegetated wall is described, which comprises a plurality of preferably parallelepiped shaped side-to-side elements. Such elements have an open cage-like structure, preferably with a front face which is open or can be opened for introducing a substrate cake or a pre-vegetated cake. The cage-like structure has the drawback that only a particular group of substrates can easily be arranged therein, which have a high water absorption/release capacity; therefore, only a limited group of plant species can be used.

Besides, the cage-like structure requires preferably a metal material, in particular corrosion resistant or anticorrosion lined materials are needed.

Furthermore, in order to remove a modular element movements along the surface of the vegetated wall are required, which are hindered by nearby elements. A similar drawback is caused by matching protrusions and recesses that are provided as a means for reciprocally fixing side surfaces of adjacent elements.

Briefly, in all the above mentioned methods, it is difficult or even impossible to provide a vertical or highly steep turf, i.e., a substantially vertical vegetated surface comprising a lawn-like uniform turf.

Furthermore, in all the above mentioned methods, it is very difficult to provide high-definition patterns or images, as well as letters and other. The resolution cannot in fact be reduced under the size of one element, which cannot be indefinitely small. Therefore, the walls made according to these methods cannot be used for reproducing high definition images, advertisements or information panels, where a resolution of about 10 square centimetres, or less, is desirable.

### Summary of the invention

It is therefore a feature of the present invention to provide a method for making modular vegetated surfaces that may have any preferred spatial arrangement, in particular, a method for making vertical or highly steep planar surfaces, which comprise grassy species for turfs, have a lawn-like appearance.

It is another feature of the present invention to provide a method for making vegetated surfaces, which allow representing decorative or artistic patterns, as well as symbols like alphanumeric characters and pictograms, and in particular polychromatic patterns, suitable for creating advertisements or information panels in general.

It is still a feature of the present invention to provide a method for making such a vegetated surface that limits moisture stagnation close to a support wall, and therefore prevents wall deterioration.

It is, furthermore, an object of the present invention to provide an element suitable for being included in such vegetated surfaces without fall of plants and substrate material.

It is, furthermore, a feature of the present invention to provide a module suitable for building such a vegetated surface, in particular, a planar surface which assists assembling and maintenance of said surface, in particular, a planar surface which assists replacing plants in a limited area of said surface.

These and other objects are achieved through a method for making a modular vegetated surface; the method comprises the steps of:
- prearranging support means for the vegetated surface and fixing the support means to a structure/wall;
- prearranging a module containing a cultivable substrate;
- choosing a plant species and creating a turf in the module, by cultivating a plurality of seedlings of such a species;
- fixing the module to the support means creating a vegetated surface that is parallel to the structure/wall;
wherein the method has the main feature that the module comprises a seedling tray, which extends according to a planar surface and comprises an array of distinct cells, the cells having a substantially closed bottom and an axis that is substantially transversal to the planar surface; and wherein the cultivable substrate fills the cells such that the seedlings are rooted in the substrate and have a portion that protrudes from the cells forming the vegetated surface, in particular, a turf.

Advantageously, a cutting step is provided of cutting the turf at a desired height, said cutting step providing the step of moving a cutting blade at a predetermined distance from the seedling tray. In this case, in order to cut vertical turf surfaces, vertically translatable cutting means are provided that cut the turf at a desired height. The cutting means can be arranged hanging from structures connected to roofs or terraces, or can translate along fixed guides arranged on the support means.

Preferably, the vegetable species is selected from the group comprised of:
- lawngrass, among which Festuca arundinacea, Festuca rubra, Festuca ovina, Agrostis stolonifera, Poa pratensis, Lolium perenne, Cynodon spp., hybrids of Cynodon, Paspalum vaginatum, Pennisetum clandestinum;
- species belonging to the type Zoysia, preferably Zoysia martella, Zoysia japonica, Zoysia tenuifolia, Zoysia sinica;
- species from the family of the convolvulacee as Dichondra spp.;
- other herbaceous or shrubby species for flowering or ground covering plants, preferably Convallaria japonica, Pachysandra spp., Sedum spp., Pervinca spp., Evonymus spp., Lonicera nitida, Cotoneaster spp.
- a combination thereof, and/or the growth substrate is selected from the group comprised of:

- a natural organic substrate, in particular, peat, coconut fibre, compost, cork, agave, kenaf, hemp, wool, agricultural residues, food-industry residues;
- a synthetic organic substrate, in particular, polymeric foams;
- a mineral substrate, in particular soil, not porous sand, porous sand such as lapillus, pumice or zeolite, vermiculite, perlite;
- a combination thereof.

According to an exemplary implementation of the method, the modular vegetated surface comprises one or more modules selected from the group comprised of:
- a natural pre-vegetated turf;
- an artificial turf;
- a mixed natural and artificial turf, the artificial turf supporting the natural turf,
- a natural, artificial or mixed turf combined with non-vegetated elements;
- a seedling tray suitable for receiving a rooting and growth substrate of vegetable species.

This way, the method allows obtaining polychromatic surfaces according to a prefixed pattern. In particular, the non-vegetated elements allow introducing colours which are normally impossible or quite difficult to obtain by means of a vegetal material.

The choice of the plant species and/or the module can be carried out in order to reproduce a prefixed pattern or a drawing. This can be obtained by distributing different plant species or varieties in the cells, i.e., in the pixels, according to the prefixed pattern. In particular, in a production plant, the modules are manufactured arranging at least one seeds or one portion of plant of a plant species or variety in each cell of a seedling tray. Also, or instead, different substrates can be similarly distributed in the cells of the seedling tray according to a prefixed pattern. For example, the substrate may contain a substance that is known in agronomy for giving a particular nuance of colour to a predetermined plant species or variety.

In the production plant the execution of a computer-assisted production program is then provided for each cell. The program controls the means for distributing the seeds and/or the substrate in the cells according to prefixed patterns. For example, releasing heads can be provided consisting of arrays of distributing units that distribute seeds of the same plant species or variety, or of the same substrate, and program means can be also provided which selectively actuate each distributing unit.

The pattern or drawing resulting from the growth of the seedlings in the cells has pixels, i.e. very small representation elements, and each pixel corresponds to a cell. High definition images can therefore be obtained. In particular, the ease with which polychromatic patterns can be achieved with a wide range of colours and tonalities is particularly useful to reproduce advertisements, symbols and drawings.

Lighting elements or a lighting network may also be put among the vegetated surface; these may have decorative function, or replace natural lighting. This enables creating a vegetated surface in a closed room, or in any place where the natural daylight is too weak to allow plant life, for instance inside civil or industrial buildings, or inside tunnels.

Advantageously, the support means comprises a plurality of mutually spaced supporting slats that are fixed to the structure/wall; the modules are connected to the slats and are therefore arranged at a distance from the structure/wall, so that a gap is provided between the modules and the structure/wall. Owing to the gap, moisture stagnation close to and on the wall is avoided or noticeably limited, such that the wall is preserved form deterioration due to the moisture. Furthermore, it is possible to obtain true ventilated walls, which causes beneficial effect on microclimate in any room internal to such walls.

The above indicated objects are also achieved through a seedling tray for making a vegetated surface; the seedling tray has a bottom and side faces arranged according to a prism or a cylinder; furthermore, the seedling tray has a means for fixing to a support in a predetermined spatial position. The main feature of the seedling tray is that it comprises inner faces that defines together with the bottom a plurality of cells which have an opening that is arranged opposite to the bottom; that the cells are suitable for receiving a plant rooting and growth substrate, and that the cells have a means for avoiding fall of the substrate in the presence of rooted plants when the seedling tray is mounted on the support in predetermined spatial positions.

This allows to provide planar vegetated surfaces up to a vertical or highly steep position, or even a surface which has downwards oriented cell openings.

Furthermore, the cells allow using a specific plant species in each cell, thereby high definition polychromatic patterns can be obtained, which have a resolution equal to that allowed by a single cell.

The cells may be prisms, in particular, right prisms; the base face of the prism can be selected in the group comprised of an isosceles or right trapezium (trapezoid), an hexagon, another regular or irregular shape; preferably, the cells are suitable for fixing to cells of another tray to assist stacking of empty seedling trays. Alternatively, the outer bottom face has stacking means comprising a plurality of wings protruding out of the tray and suitable for engaging the cell openings of another seedling tray.

The seedling trays are stiff enough to hold the weight of a wet growth substrate and of the rooted seedlings, even in case of wind.

In particular, the means for avoiding fall of substrate is selected from the group comprised of:
- a right prismatic or cylindrical shape, with side faces or generating lines perpendicular to the bottom;
- a frusto-conical or frusto-pyramid shape, with the major base inside the seedling tray;
- a hole through a wall of the cells, the hole allowing outlet of growing roots from the cells;
- a channel between two cells, suitable for being run through by a growing root;
- protruding portions and recesses, or cell inner porosities.

Advantageously, holes are drilled on the side faces, the holes suitable for being fixed to external supporting elements. For example, such holes can be used to provide a joint with a door or window frame on a wall to be equipped with a planar vegetated surface. Such holes can be plugged by a breakable means such as for example a thin membrane or a narrow element connecting the plug and the edges of the hole.

Advantageously, each cell has a hole drilled in the bottom to allow passage of water or of a solution of nutrients.

Preferably, on the outer face of the bottom of the seedling tray and/or between the openings of the cells, channels or notches are provided suitable for assisting collection or distribution of water which passes through the holes that are drilled in the bottom of the cells, or through the openings of the cells. Such channels or notches provide effective means to avoid local deterioration of the vegetated surface due to uneven distribution of irrigation water or of nutrients, or of other useful substances; this reduces the need to replace the vegetation that is contained in the seedling trays.

Preferably, the seedling trays are made of plastics, in particular of polystyrene, or of properly filled polyvinylchloride or of a polyolephine, such that the vegetated surface weight and the load on the support means is reduced, assuring at the same time a stiffness suitable for resisting wind loads, clamping loads, as well as proper resistance against atmospheric agents.

In an advantageous exemplary embodiment, the right prism is a right parallelepiped, and the cells are arranged in rows parallel to the side faces.

In this case, the seedling tray has dimensions selected from the group comprised of:
- side length set between 20 and 200 centimetres, in particular, between 30 and 80 centimetres, for example between 40 and 60 centimetres;
- height set between 10 and 100 millimetres, in particular, between 40 and 80 millimetres;
- side and internal wall thickness set between 2 and 6 millimetres, the side wall being limited by side faces;
- cells cross sectional dimensions set between 10 and 150 millimetres, in particular, between 20 and 50 millimetres, and preferably between 35 and 45 millimetres, the cross sections being circular or square.

The above mentioned tray sizes, and the stacking means, facilitate both manufacturing and yard handling of the seedling trays, as well as their assembling. At any rate, large seedling trays according to the invention, with up to some metres long sides that are, and respective turfs, can also be easily obtained.

Advantageously, centring means are provided for mutual centring between the seedling trays; the centring means may consist of a linear recess on a side face of a first seedling tray and of a linear protrusion extending from the side face of a second seedling tray; the recess and the linear protrusion are suitable for reciprocally engaging forming a joint which allows extraction of a seedling tray without removing adjacent seedling trays. It is therefore possible to obtain an excellent alignment of the trays of a vegetated surface, without the assistance of expensive and difficult-to-use external means, which also allows extracting one seedling tray without dismantling any adjacent tray.

The linear protrusions and recesses can also be used to fasten porous or perforated horizontal tubes, gutters or other means for spreading/collecting water and nutrients to/from trays that pertain to horizontal top/bottom rows of an array, and do not require joining with above/below arranged rows of modules. An alternative way to supply water and nutritive elements provides falling of a liquid from above and collecting it below by means of a collecting gutter, for example of hydroponic type.

Advantageously, the seedling tray comprises modules of prefixed shape, that comprise respective groups of cells, and can be separated and removed from the seedling tray. This further facilitates replacing of plants of the vegetated surface and is useful, in particular, to modify pattern details.

Advantageously, the means for fixing a seedling tray to a support are selected from the group comprised of:
- an element of the tray side face which is suitable for engaging a section bar belonging to the support, preferably a C, H or L section bar, such that the tray is allowed to slide along the section bar and is hindered to move transversal to the section bar,
- a through hole that is suitable for receiving substantially cylindrical coupling means, which are selected from the group comprised of: a screw, in particular a self-tapping screw, a screw rod or a screw integral to the support, a stud associated with a nut screw, a pin, a nail, the coupling means engaging in use a portion of the support suitable for receiving them,
- a plurality of engagement means that are arranged on the seedling tray side faces and are adapted to match cooperating means that are integral to the support,
- a combination thereof.

In the case of fixing means that allow the tray to slide along a section bar, the section bar has an end portion and a joint/hinge for dismantling/rotating the end portion, in order to facilitate the insertion of terminal seedling trays, in particular, of terminal seedling trays that have to be arranged close to a corner or to other wall singularity.

Preferably, the seedling tray comprises at least one housing for the substantially cylindrical coupling means; this housing is adjacent to an inner wall or to a side wall of the seedling tray, in particular, it is arranged at the cross point between inner and/or side walls of the seedling tray; in particular, the housing is arranged between adjacent walls of two or more separable and removable modules. This arrangement allows removal of the adjacent modules from the tray together with removal of the seedling tray from the support, and limits the amount of singularities and overall encumbrance of the housings of the coupling means.

The engagement means for fixing the seedling tray to the support may be a couple of engagement wings which protrude out of the bottom face and are suitable for engaging with the end of fastening elements fixed to the support.

The above described seedling trays can be advantageously used, for example, to build wall coatings for advertisement or decoration purpose, in particular, polychromatic coatings, or to build ventilated walls, for insulation and/or cooling purpose.

A step can be provided of arranging lighting elements or a lighting network among the vegetated surface, which may have decorative function, or replace the natural lighting.

### Brief description of the drawings

The method according to the invention will now be shown with the following description of an embodiment thereof, exemplifying but not limitative, with reference to the attached drawings wherein:
- Figures 1A and 1B show perspective views of two seedling trays suitable for building a vegetated surface;
- Figures 2A, 2B, 2C show perspective views of means for fixing seedling trays of the type shown in figures 1A and 1B;
- Figures 3A and 3C show cross sectional views of the seedling trays of figure 2A 2B, with internal details of the cells contained therein,
- Figures 3B, 3D, 3E show cross sectional views of other seedling trays,
- Figure 4 shows a perspective elevation view of a further seedling tray suitable for building a vegetated surface,
- Figures 5A and 5B show cross sectional views of the seedling tray of figure 4, with internal details of the cells of the seedling tray, in particular, details of means for fixing the seedling tray to a support,
- Figures 6A and 6B show side views of a seedling tray which is similar to the seedling tray as shown in figure 4, but having alternative means for fixing to a support,
- Figure 7 shows a vertical cross sectional view of a wall that is equipped with a vegetated surface that comprises seedling trays according to figure 6A and 6B, with a detail of the means for fixing to a support,
- Figure 8 shows a side view of a wall along which a vegetated surface is provided that comprises seedling trays according to figure 4, with a detail of the means for fixing the trays to a support wall,
- Figures 9AöC show a perspective view of details of a seedling tray of the type shown in figure 4 or 6A/B, belonging to the top row of an array of trays and provided with means for distributing water or nutrients,
- Figure 10 shows a front view of a vegetated wall comprising seedling trays of the type shown in figures 1A or 1B or 4 or 6A/B, with a diagrammatic representation of a composition obtainable by means of such vegetated surface,
- figure 10A is a detail of figure 10,
- Figure 11 shows diagrammatically the technique for executing a step of sowing a seedling tray which can be used to provide a vegetated planar surface according to the invention,
- Figures 12A and 12B show diagrammatically in a side and in a front view the technique for executing a cutting step of grass of a turf vegetated planar surface according to the invention.

### Description of preferred exemplary embodiments

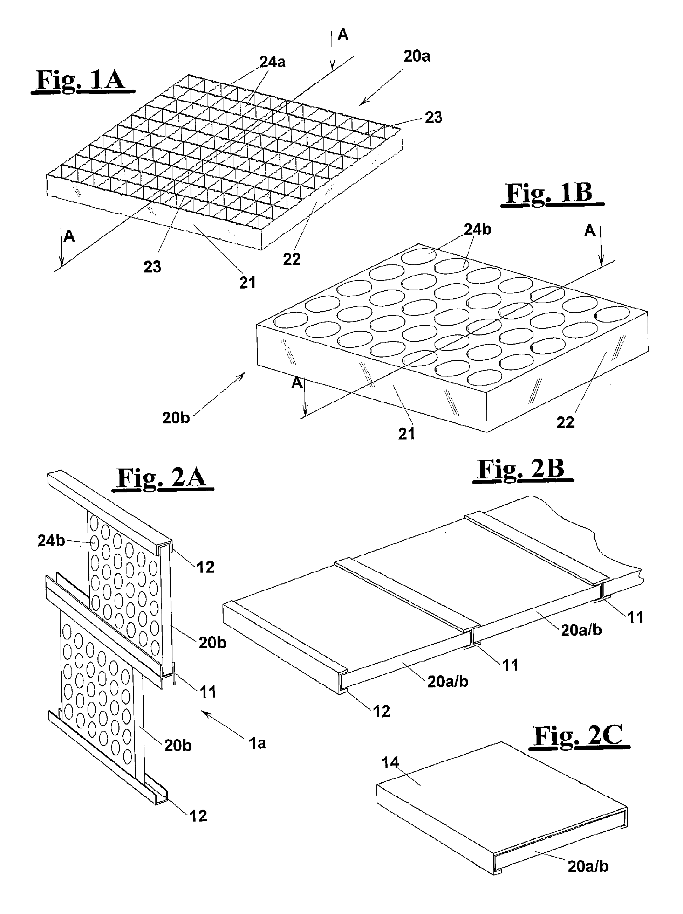

With reference to figures 1A and 1B, seedling trays 20a and 20b are described for providing a vegetated surface. The seedling trays extend according to a planar surface and have side faces 21 and 22 and a bottom, not shown in the drawings, arranged according to five faces of a right parallelepiped.

Within seedling tray 20a internal walls 23 are shown (figure 1A), which define, together with the bottom, a plurality of substantially identical cells 24a, that have a square cross section. Alternatively (figure 1B), seedling tray 20b comprises cells 24b that have have circular opening, and right cylindrical, or conical, or prismatic shape.

As described more in detail hereinafter, cells 24a or 24b have the function of receiving a growth substrate and a seedling that is rooted in this substrate. This way, the plurality of cells, which are arranged adjacent to one another, contain an equal number of seedlings, and create a regularly vegetated surface which hides details of the seedling tray and of the cells. The seedling tray can be cultivated in a greenhouse, or outdoor, or in a production plant, and then it can be used to build a vegetated surface by arranging seedling trays adjacent to one another, both along the long side and along the short side of the seedling tray. In particular, a modular turf can be obtained by cultivating a turf species in the cells.

According to a first technique for fixing the seedling trays to a support structure, side faces 21 and 22 have a linear profile suitable for engaging the support means, as shown in figures 2A and 2B, provided by C- or H-section bars 12 and 11. Such section bars belong to supporting structures of vertical or horizontal planar vegetated surfaces, which are diagrammatically shown in figures 2A and 2B, respectively; vegetated surfaces that may have any spatial arrangement can be however supported in the same way. In particular, the horizontal wall may be a ceiling: in this case, the supporting structure may comprise, alternatively to section bars 11 and 12, a support 14 as in figure 2C, to be fixed to the ceiling.

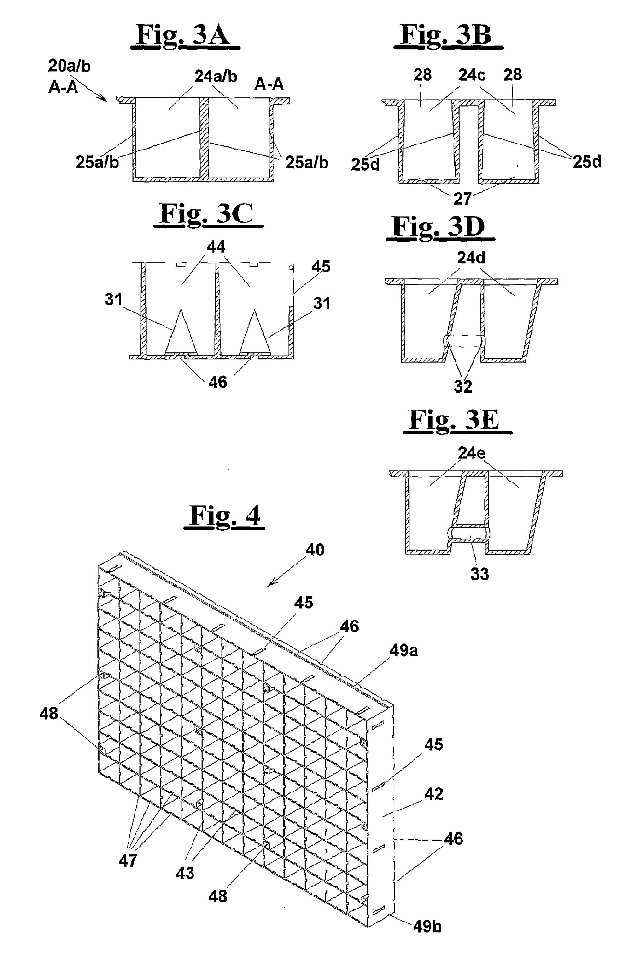

As shown in figure 3A, cells 24a and 24b have inner faces 25a or generating lines 25b that are perpendicular to the planar surface according to which seedling tray 20a or 20b extends. Alternatively, cells 24c may have inner faces or generating lines 25d as shown in figure 3B, wherein a cell 24c has right frusto-conical or right truncated pyramid shape, with the major base arranged opposite to the cell opening. The inclination of inner faces or of generating lines 25a/b or 25d of cells 24a/b/c (figures 3A and 3B) provides a means for avoiding fall of growth substrate, provided that rooted plants are present in the cell. Owing to this means, it is possible to use the seedling trays, for example seedlings trays 20a and 20b, to make vertical, highly steep or even downwards oriented vegetated walls.

Other means for avoiding fall of substrate are shown in figures from 3C to 3E, and comprise holes 31 and 32 that are drilled through the inner faces of cells 44, 24d and 24e. The holes have triangular or elliptical shape, which are selected according to the techniques used to manufacture the seedling trays. These holes are effective to avoid fall of substrate since they allows the passage of roots which, outside of the cells, can reach further rooting surfaces thus consolidating the mass of roots and substrate. In addition to holes 31 and 32, the means to avoid fall of substrate may comprise channels 33 joining holes 31 and 32 and suitable to be run through by growing roots, for example between cells 24e of figure 3E. These solutions for avoiding a substrate fall, like above described holes 31 and 32, and possibly channels 33, allow covering vertical or highly steep walls, or even ceilings and vault roofs.

Figure 4 shows a seedling tray 40 for making a vegetated surface, which is similar to seedling tray 20a of figure 1a. Also in this case, cells 44 have square cross section, as shown more in detail in figure 3c. In particular, cells 44 have longitudinal section that diverge towards the cell opening, and have also holes 31 to allow passage of roots, thus preventing fall of rooted substrates as previously described.

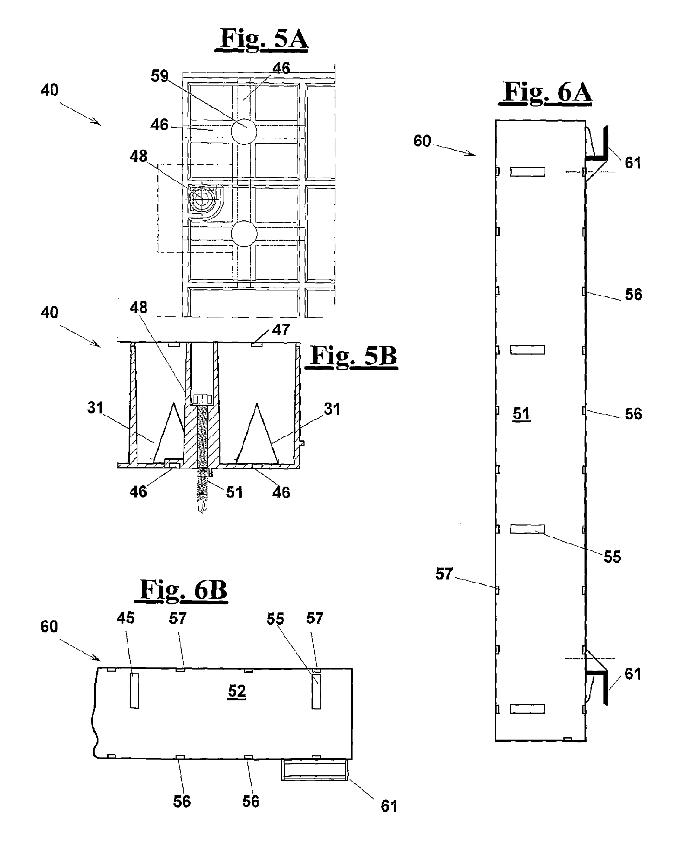

A seedling tray 40 has recesses 48 with through holes, for housing, for example, self-tapping screws used as means for fixing the tray to a support structure. Instead of the screws, recesses 48 may be used for guiding pins, nails, pulling elements or screw rods associated with nut screws. Recesses 48 are arranged according to a rectangular mesh at a crossing point of inner faces 43 and/or side walls 41 and 42 of the seedling tray, in order to as little as possible interrupt the continuity of the vegetated surface, and to assist fixing operations without affecting the plants rooted in the cells. A recess 48, engaged by a self-tapping screws 51, is shown more in detail in figures 5A and 5B.

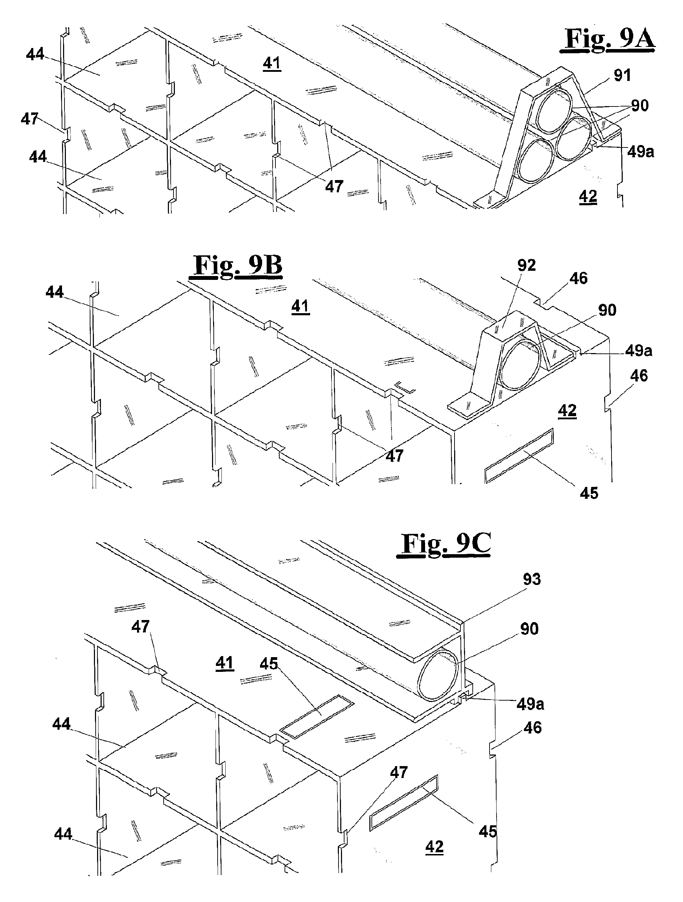

Still with reference to figure 4, a linear protrusion 49a is shown which protrudes from a side surface 41 and is suitable for engaging a corresponding groove 49b that is made on the side surface, not shown in figure 4, that is parallel to side surface 41. Such protrusions and grooves serve as means for mutually centring seedling trays 40, which gives good planarity to the vegetated surface, and also allow removal of seedling tray 40 without removing any adjacent seedling tray. A linear protrusion 49a and a groove of a seedling tray arranged in a top and bottom row of an array of trays, which are not engaged with corresponding elements of adjacent trays, can be used for positioning and fastening such elements as tubes for irrigation or devices for collecting irrigation water or rainwater. In figures 9A-C three different solutions are shown for fastening irrigation tubes 90 above a portion of a vegetated wall which comprises seedling trays 40. The tubes are fastened by means of blocking means 91 or 92, which are suitable for blocking respectively one or three tubes 90; or by a C-section bar 93, which has a groove suitable for engaging a linear protrusion 49a.

Side faces 41 and 42 of seedling tray 40 have a plurality of holes 45 that are used for joining seedling tray 40 with an external structure, for example with a plate. Such holes are shown in figure 4 and, more in detail, in figure 9a-c. Furthermore, each cell 44 has a hole 59 centred in the bottom, in order to allow passage of irrigation water, rain water, as well as nutritive or useful substances solutions. Holes 59 are connected, outside of the bottom of the seedling tray 40, by grooves 46, shown in figures 5A and 5B, which assist distributing or collecting water or solutions of useful substances. Notches 47 made in the edges of inner walls 43 between adjacent cells, also shown in figure 5B and, more in detail, in figures 9A-C, have a similar function.

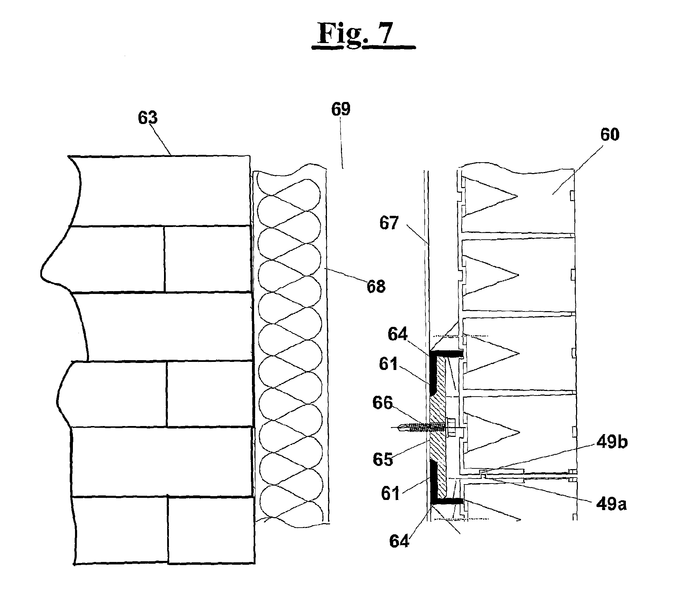

In figures 6A-B, a seedling tray 60 is shown according to two side views, which is similar to the seedling tray 40 of figure 4, but has means for fixing that consist of couples of wings 61 that are arranged on the outside surface of bottom 62 of seedling tray 60. Side walls 61 and 62 of seedling tray 60 have, like walls 41 and 42 of seedling tray 40, holes 55 for fixing the tray to an external structure. Figures 6A-B show also cross sections of channels 56, and notches 57, similar to corresponding details 46 and 47 of seedling tray 40. As shown in figure 7, wings 61 are suitable for engaging an end 64 of a fastening element 65 fixed by a screw 66 to a supporting structure 67, which is connected to a wall 63 in a not shown way. Supporting structure 67 is made and connected to wall 63 in such a way that a gap 69 is left between wall 63 and the vegetated surface, to allow circulation of air and limit therefore moisture stagnation, in order to prevent deterioration of wall 63. Besides, gap 69 is necessary when wall 63 is coated with an insulating layer 68, like in the case of figure 7.

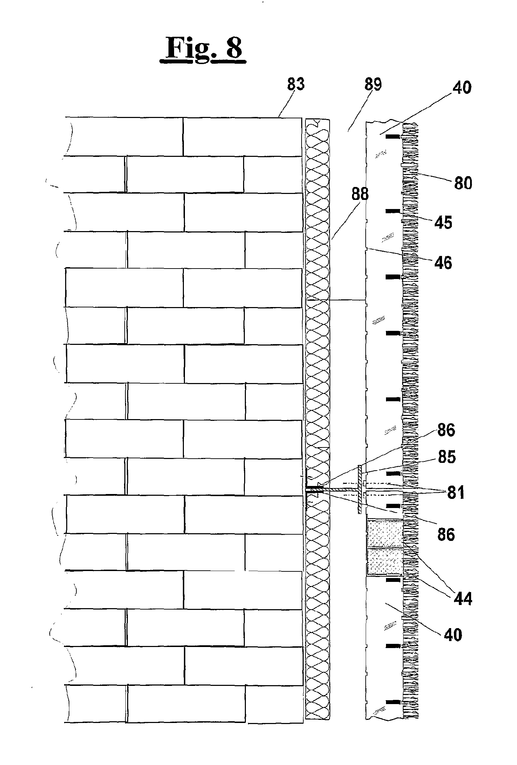

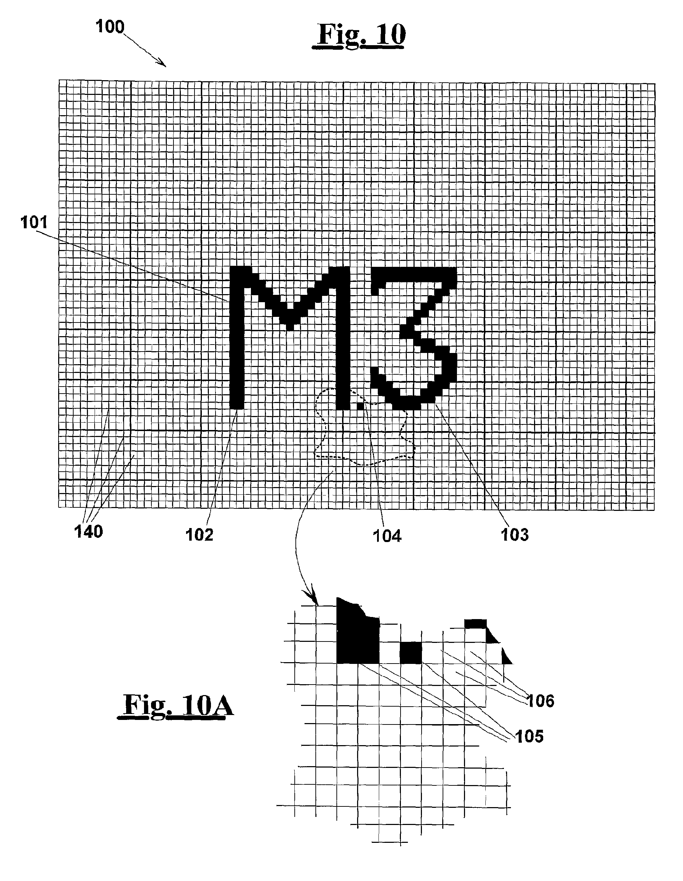

Figure 8 diagrammatically shows a vegetated surface 80, which is cultivated in seedling trays 40 that are suitable for fixing to a support by means of screws 51 (figures 4, 5A-B). Seedling trays 40 are connected by means of screws 51, which have an axis 81, to wings of a T section bar 85, which is stably connected to angle section bars 86 that are symmetrically arranged to contain the core of section bar 85 and are connected to wall 83 in a conventional way. The connection between angle section bars 86 and T section bar 85 is furthermore stabilized by means of bolts, not represented. T section bar 85 is chosen in order to ensure a gap 88 between vegetated surface 80, which is made of seedling trays 40, and wall 83, as required to allow a heat and/or acoustic insulating coating to be mounted, as in case of the layer 83. Figure 10 shows a portion of a vegetated planar surface 100, which comprises seedling trays 140 that are made and vegetated according to the invention, as described, and are suitable for reproducing a message 101, which here is limited in figure 10 to two alphanumeric characters 102 and 103, and to a typographical point 104. This representation is obtained (Figure 10A) by cultivating cells 105, which correspond to the alphanumeric characters, with a vegetable species of a colour that is different from the colour of the species used for cultivating cells 106, which are external to the typographical characters. The resolution that can be obtained is therefore equal to the one that is allowed by cells 105, 106, whose surface and top plan is about a few square centimetres, and forms therefore a pixel or elementary unit of representation.

Alternatively, to obtain inscriptions of colour that cannot be obtained by any plant species, the cells yhat correspond to the types of these inscriptions may be left unseeded, or may be constantly filled with a properly coloured material. Due to typographic reasons, an example has been chosen here which is based on typographical characters, but a much wider variety of representations is possible by means of vegetated surface 100, since polychromatic decorations or artistic effects can be obtained, by means of a wide range of plant species or varieties, which are characterised by different colours and shades, or by means of flowers, by distributing them in cells/pixels 105 and 106 according to predetermined patterns. Different nuances of colours can also be obtained by changing some features of the substrate of culture, i.e., by introducing in the substrate substances that are known in agronomy for giving particular colour nuances or even particular colours to predetermined plant species or varieties.

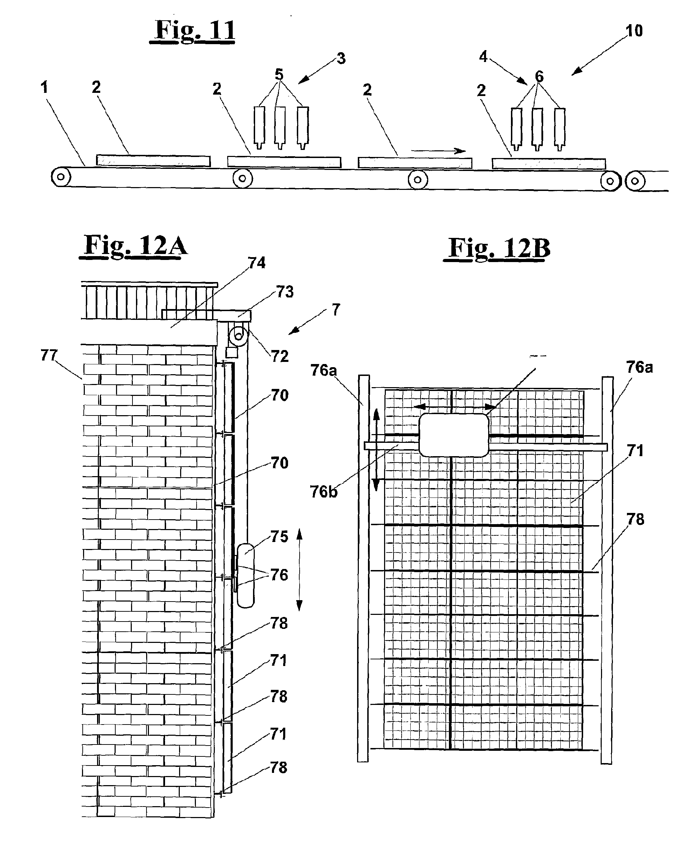

As previously remarked, the seedling trays can be manufactured by conventional techniques, outdoors or in a greenhouse, but even by industrial techniques. In figure 11 a production line 10 is diagrammatically shown wherein a step is carried out of automatic sowing of plant species in seedling trays 2. Line 10 comprises a conveyor belt 1 on which seedling trays 2 are arranged, at a proper mutual distance. Line 10 comprises furthermore, a station 3 for introducing a substrate in the cells of seedling trays 2, and a station 4 for true sowing, i.e., for introducing seeds in the cells that have been filled with substrate in station 3. Stations 3 and 4 comprise sowing heads 5 and 6 that consist of respective arrays of distributing units, each of these units distributing a substrate and seeds of a predetermined variety/species of substrate or seed; program means residing in a computer, not shown in figure 11, carry out a production program for each cell, by selectively operating the distributing units according to a pattern, which corresponds to a predetermined subject to be represented. Obviously, a distributing unit can sow a portion of a plant in the cells instead of seeds of a plant species, for example it may distribute stolons, rhizomes, or seedlings.

With reference to figure 12, a device 7 is described which carries out a cutting step of a turf 70 that is cultivated in seedling trays 71 according to the invention, in order to keep a desired grass height. Seedling trays 71 are connected to a wall 79 of a building 77 by a device 78 consisting of an angle-section bar and of a T-section bar, as shown more in detail in previously described figure 8. Device 7 comprises a hoist 72 that is arranged hanging from a structure 73, that may be connected, for example, to a terrace 74; alternatively, a roof may be used, or any protruding element of proper resistance, belonging to the building that is coated by the turf 70. The hoist 72 operates the rise and the descent of a cutting head 75, which has proper cutters 76, at a distance from the turf 70 that is suitable for cutting the turf to a desired height.

In another exemplary embodiment, as shown in figure 12b, the cutting head 75 translates horizontally on a guide 76b that slides vertically along guides 76a that are connected to both sides of a support structure 78 of the vegetated wall. Cutting head 75 can also be so wide as the whole turf.

Although reference to planar surfaces has always been made in the foregoing description, this does not exclude that curved vegetated surfaces can be provided according to the invention, such as cylindrical, parabolic, etc. surfaces, that can be obtained by means of a plurality of planar or curved seedling trays.

The foregoing description of specific embodiments will so fully reveal the invention according to the conceptual point of view, so that others, by applying current knowledge, will be able to modify and/or adapt for various applications such embodiments without further research and without parting from the invention, and it is therefore to be understood that such adaptations and modifications will have to be considered as equivalent to the specific embodiments. The means and the materials to realise the different functions described herein could have a different nature without, for this reason, departing from the field of the invention. It is to be understood that the phraseology or terminology employed herein is for the purpose of description and not of limitation.

## Claims

1. Seedling tray (20a) for making a vegetated surface parallel to a structure/wall, said seedling tray comprising a bottom, side faces (21, 22) and internal walls (23) defining a plurality of cells (24a), for receiving growth substrates and rooted seedling, each cell comprising an opening, wherefrom said rooted plants may protrude, and holes (32) through inner faces (43) of the cells (24a), for the passage of roots.

2. Seedling tray (20a) according to claim 1 wherein said side faces (21, 22) comprise a linear recess (49b) or linear protrusion (49a), suitable for reciprocally engaging a linear protrusion (49a) or linear recess (49b) of another seedling tray (20a).

3. Seedling tray (20a) according to claim 2 comprising a C section bar (93) including at least one tube (90) for collecting irrigation water or rainwater, said section bar (93) having a groove engaged with said linear protrusion (49a) and a protrusion engagable with the linear recess (49b) of another seedling tray.

4. Seedling tray (20a) according to claim 1 comprising recesses (48) at a crossing point of said inner faces (43) for fixing the seedling tray to a support structure.

5. Seedling tray (20a) according to claim 1 comprising channels (33) which join holes (32) between said cells (24e), for the passage of roots.

6. Seedling tray (20a) according to claim 1 wherein the bottom of each cell comprises a hole (59), groves (46) connected to the hole (59), and notches (47) in edges of said inner faces (43), for collecting and distributing water.

7. Seedling tray (20a) according to claims 1 wherein said cells have right frusto-conical or frusto-pyramid shape with a major base of the cell opposite to the cell opening.

8. Seedling tray (20a) according to claims 1, the seedling tray being of plastic or polystyrene or polyvinylchloride or plyolephine.

9. Seedling tray (20a) according to claims 1, comprising removable modules of predetermined shape, each module including a group of said cells.

10. Seedling tray (20a) according to claim 1, having a side length between 20 and 200 centimetres and height between 10 and 100 centimetres, preferably having a size of 40 X 60 centimetres.

11. Seedling tray (20a) according to claim 1, wherein a thickness of said side faces (21, 22) and internal walls (23) is between 2 and 6 millimetres and a square or round cross section of said cells (24a) is between 10 and 150 millimetres.

12. Device comprising at least one seedling tray (20a) according to claims 1-11 and a support for connecting said seedling tray (20a) to a structure/wall leaving a gap (81) between the tray (20a) and the structure/wall, the cells (24a) of said seedling tray (20a) including at least one growth substrate and a rooted seedling for covering the structure/wall with a vegetated surface.

13. Device according to claim 12 wherein the bottom of said seedling tray (20a) comprises wings (61) engaging an end (64) of a fastening element (65) fixed to said support.

14. Method for automatic sowing in one or more seedling trays according to any of the claims 1-11, the method comprising the steps of: -arranging on a conveyor belt said seedling trays, activating a substrate stations (3) which introduces substrates in the cells of said seedling trays and activating a seedling station (4) which introduces seeds in said cells, wherein distributing units of said substrate stations (3) and seedling stations (4) are selectively operated to distributes substrates and seeds of predetermined variety/species which corresponds to a predetermined pattern or subject to be represented.

15. Method for cutting turfs (70) in one or more seedling trays of a device according to claim 12, translating a cutting head (75) on a guide (76b) which is arranged to cover an horizontal length of said structure/wall, sliding the guide (76b) along guides (76a) connected to said support and arranged to cover a vertical length of said structure/wall.
